# EUROPÄISCHE PATENTSCHRIFT

(11) **EP 3 766 384 B1**
(45) Veröffentlichungstag und Bekanntmachung des Hinweises auf die Patenterteilung: **09.03.2022**
(21) Anmeldenummer: 20186144.0
(22) Anmeldetag: 16.07.2020
(51) Int. Cl.: A47B 96/06, F16B 12/20

(54) **VERBINDUNGSVORRICHTUNG INSBESONDERE FÜR MÖBEL**
CONNECTING DEVICE ESPECIALLY FOR FURNITURE
DISPOSITIF DE CONNEXION, NOTAMMENT POUR LES MEUBLES

(30) Priorität: 17.07.2019 IT 201900012105
(43) Veröffentlichungstag der Anmeldung: 20.01.2021
(73) Patentinhaber: Kamelger, Hartwig, 39039 Niederdorf (IT)
(72) Erfinder: Kamelger, Hartwig, 39039 Niederdorf (IT)
(74) Vertreter: Ausserer, Anton

(56) Entgegenhaltungen:
- EP-A1- 0 930 436
- SE-A1- 1 300 329

## Beschreibung

Die vorliegende Erfindung bezieht sich auf eine Verbindungsvorrichtung, insbesondere für Möbel gemäß dem Oberbegriff des Patentanspruchs 1.

Für die Verbindung von Möbelteilen wird oftmals eine lösbare, wirtschaftliche und möglichst nicht von außen sichtbare Verbindung während der gesamten Lebensdauergefordert.

Aus EP 3 302 175 ist eine Verbindungvorrichtung zwischen Möbelbestandteilen bekannt, die ein längs der Längsachse zwischen einem ersten, in einer ersten Aufnahme aufgenommenen und einem zweiten in einer zweiten Aufnahme aufgenommenen Ende gespanntes Gehäuse umfasst. Die Verbindungvorrichtung umfasst einen Zuganker mit veränderlichem Querschnitt. Ein Exzenterteil ist für das Einhaken des Zugankerkopfes zur Verstellung des Zugankers in Klemmrichtungen eingerichtet, sobald dieses Exzenterteil um die eigene Hauptachse X gedreht wird. Durch diese Verstellung spreizt der Zuganker den in der Aufnahme angeordneten Zugankerkopf, die Verbindung zwischen dem Zugankerkopf und der Verbindungsvorrichtung wird jedoch nur durch die Reibung zwischen dem Zugankerkopf und der Möbelaufnahme sichergestellt.

Außerdem erzeugt die so hergestellte Verbindung nur eine Reibungskraft zwischen dem Zugankerkopf und der Möbelaufnahme, jedoch keine Zugkraft zwischen den beiden Möbelteilen.

Die Patentanmeldung EP 3 502 491 beschreibt eine Verbindungsvorrichtung zwischen Möbelbestandteilen, umfassend einen länglichen Körper, der sich längs einer eigenen Längsachse zwischen einem in einer ersten im ersten Möbelbestandteil ausgenommenen Aufnahme aufnehmbaren Abschnitt und einem zweiten in einer zweiten im zweiten Möbelteil ausgenommenen Aufnahme aufnehmbaren Abschnitt abwickelt, wobei der längliche Körper einen ersten und einen zweiten spreizbaren Bereich umfasst, die jeweils dem ersten und dem zweiten Abschnitt zugeordnet sind und zwischen einem radial zusammengezogenen Zustand und einem radial gespreizten Zustand verstellbar sind.

Die Verbindungvorrichtung umfasst überdies Stellglieder mit mindestens einem Spreizkörper, der im länglichen Körper aufgenommen und mit mindestens einem ersten und einem zweiten verbreiteten Abschnitt versehen ist, die jeweils dem ersten und dem zweiten Spreizbereich zugeordnet sind. Dieser Spreizkörper ist zwischen einer ersten Stellung, in der er den ersten und den zweiten Spreizbereich in der radial zusammengezogenen Stellung hält und einer zweiten Stellung wahlweise verstellbar, in der der erste und der zweite verbreitete Abschnitt den ersten und den zweiten Spreizbereich in die radial gespreizte Stellung bringen. Das Spreizkörper umfasst eine Vielzahl von zueinander beabstandeten längs der Längsachse radialen Schultern der Art, dass ein Wechsel von Erhöhungen festgelegt wird, mit dem in der radial gespreizten Stellung jede radiale Schulter mit dem ersten Spreizbereich derart unter radialem Druck in Eingriff steht, dass eine verlängerte Spreizung des ersten Spreizbereiches hergestellt wird, der sich mindestens in die radiale Schulter erstreckt.

Die beschriebene Vorrichtung erfordert, dass der Hohlkörper aus zwei einzelnen Teilen gebildet wird, in denen dann das Aktivierungsteil umschlossen wird, da das Aktivierungsteil Verbreiterungen auf beiden Seiten aufweist, um den Hohlkörper spreizen zu können und auf diese Weise die Verbindungsvorrichtung in den jeweiligen Aufnahmen arretieren zu können. Dies verlangt eine komplexere Stellung und eine Zusatzarbeit während der Montage. Es können überdies Probleme bei der Befestigung der beiden einzelnen Teile entstehen und daher konnte diese Vorrichtung nicht mehr so widerstandsfähig im Gebrauch sein.

Aus der SE 1 300 329 ist eine weitere Verbindungsvorrichtung für Möbel bekannt.

Aus der DE 10 20043179 ist eine lösbare Verbindungvorrichtung für die Verbindung eines ersten Bauteils mit einem zweiten Bauteil bekannt, die Elemente für die Verankerung des ersten und des zweiten Bauteils umfasst. Insbesondere ist sie der Art ausgebildet, dass sie nicht drehbar symmetrisch mit einer Außenkontur ist, die einen Querschnitt mit zwei Halbkreisen aufweist, die durch zwei Linien verbunden sind. Auf diese Weise wird versucht, die ungewollte Drehung des Gegenstandes zu vermeiden, es wird jedoch noch die Längsbewegung ermöglicht, die Probleme bei der Aktivierung des Verbindungselementes schaffen konnte, da sie mit der Bohrung ausgerichtet werden muss, durch die sie aktiviert wird.

Die Aufgabe der vorliegenden Erfindung ist daher die Ausführung einer Verbindung von zwei Elementen unter lösbarer Arretierung in der Verbindungstellung, wobei eine hohe Standfestigkeit und eine Zugkraft zwischen den beiden Möbelteilen sichergestellt werden soll.

Diese Aufgabe wird durch eine Verbindungvorrichtung mit den Merkmalen des kennzeichnenden Teils des Patentanspruchs 1 gelöst.

Es wird eine Verbindungsvorrichtung zwischen zwei Bestandteilen vorgeschlagen, umfassend einen Hohlkörper, der sich längs einer Längsachse zwischen einem ersten, in einer ersten im ersten Bestandteil ausgenommenen Aufnahme auf genommenen und einem zweiten in einer zweiten in einem zweiten Bestandteil ausgenommen Aufnahme aufgenommenen Ende erstreckt, wobei der Hohlkörper bevorzugter Weise mittig einen radial spreizbaren Bereich aufweist, wobei der Hohlkörper an einem seiner Enden eine Öffnung für die Einbringung eines Aktivierungselementes aufweist, wobei das Aktivierungselement innerhalb des Hohlkörpers verschiebbar ist und wobei die Verbindungsvorrichtung dadurch gekennzeichnet ist, dass der Hohlkörper an einem Ende mindestens eine in Richtung des Endes einen Winkel größer als 90° gegenüber der Längsachse des Hohlkörpers aufweist und dass mindestens eine Aufnahme Aussparungen und mindestens eine Öffnung auf ihrer Seitenfläche aufweist, und wobei das Aktivierungselement sich in Richtung eines Endes verjüngt und eine im Wesentlichen mittig angeordnete Öffnung aufweist und das Aktivierungselement und der Hohlkörper bevorzugter Weise über ein Verbindungselement verbunden werden, das den Hohlkörper und das Aktivierungselement verbindet, wobei das Aktivierungselement in der seitlichen Öffnung des Hohlkörpers und in der Öffnung des Aktivierungselementes eingeführt ist, wobei das Verbindungselement auf dieser Weise den Hohlkörper und das Aktivierungselement verbindet, und wobei das Verbindungselement einen Vorsprung aufweist, der drehbar mit dem Aktivierungselement gekoppelt ist und unter Drehung des Verbindungselementes das Aktivierungselement von einer ersten Ruhestellung in eine zweite Arretierstellung bringt, in der das Ende, das eine in Richtung des Endes mit einem Winkel größer als 90° geneigte Fläche aufweist, in der die eine Aussparung aufweisende Aufnahme eingebracht, aufgespreizt wird.

Die erfindungsgemäße Verbindungvorrichtung weist ein erstes Ende auf, das aus mindestens zwei Klappen besteht, die an ihren freien Enden jeweils eine in Richtung des Endes geneigte Oberfläche aufweisen. Diese geneigte Oberfläche liegt bei Spreizung der Klappen auf der die Aussparung in der Aufnahme bildenden Fläche auf und es wird eine Zugkraft zwischen den beiden zu verbindenden Bestandteilen erzeugt. Erfindungsgemäß ist das andere Ende der Verbindungvorrichtung mit einem Querschnitt in der Form eines Doppelkreises ausgebildet, in der sich die beiden Kreise schneiden, jedoch sich überlappen. Die Schnittfläche weist einen Durchmesser kleiner als der Radius eines Kreises auf. Auf diese Art und Weise kann das Ende nur auf zwei vorbestimmten Weisen in der in Bestandteil gebildeten Aufnahme eingeführt werden. Die Aufnahme des Bestandteils, wie auch eine seitliche Öffnung für den Zugang zum Verbindungselement, zentriert den Zugang zum Verbindungselement von außen, da es auf beiden Seiten der Verbindungvorrichtung aktivierbar ist.

An einem ersten Zeitpunkt wird in einem ersten Bestandteil eine erste Aufnahme für die Befestigung der Verbindungvorrichtung gebildet. Diese erste Aufnahme weist eine Aussparung auf, um eine optimale Befestigung der erfindungsgemäßen Vorrichtung zu erlauben.

An einem zweiten Zeitpunkt wird in einem zweiten mit dem ersten Bestandteil zu verbindenden Bestandteil eine zweite Aufnahme für die Befestigung der Verbindungvorrichtung hergestellt. Diese zweite Aufnahme ist im Wesentlichen in bevorzugter Weise als ein sich kreuzender Doppelkreis ausgebildet. Diese Aufnahme kann einfach und schnell durch zwei übereinander liegende Bohrungen ausgeführt werden. Auf diese Weise kann auch die Verbindungsvorrichtung zentriert werden. Die zweite Aufnahme weist überdies eine seitliche Öffnung auf, die außerhalb des Bestandteils zugänglich ist. Sobald die Verbindungsvorrichtung in der zweiten Aufnahme bevorzugter Weise eingepresst ist, wird dann das andere Ende der Verbindungsvorrichtung in der ersten Aufnahme mit Aussparung im ersten Bestandteil eingebracht. Nach Einbringung der beiden Enden in den jeweiligen Bestandteilen mittels zum Beispiel eines Werkzeugs wird das Verbindungselement gedreht, das auf diese Weise das Aktivierungselement in Richtung der ersten Aufnahmen schiebt. Mit der Längsbewegung des Aktivierungselementes spreizen sich die am ersten Ende der Verbindungsvorrichtung angeordneten Klappen/Schultern und gleichzeitig wird mit dem Vorschub des Aktivierungselementes auch das zweite Ende gespreizt. Auf diese Weise wird mit der Längsbewegung des Aktivierungselementes eine Befestigung des zweiten Endes der Verbindungvorrichtung hergestellt und es wird auch ein Zug zwischen den beiden Bestandteilen durch das erste Ende der Verbindungsvorrichtung erzeugt, die aufgespreizt werden und die geneigten Oberfläche liegen in der Aussparung der ersten Aufnahme auf und erzeugen eine Anziehungskraft.

Schon vor der Spreizung, wenn das erste Ende in der ersten Aufnahme eingebracht ist, tritt dieses Ende schnappartig in die Einsparung ein und dies gewährleistet schon vor der Arretierung über das Aktivierungselement die Positionierung der Verbindungsvorrichtung in der ersten Aufnahmen und vermeidet ungewollte Austritte und die Befestigung in einer nicht deckungsgleichen Stellung.

Bevorzugter Weise weist die Verbindungsvorrichtung zwischen dem ersten in der ersten Aufnahme einfügbaren Bestandteil und dem zweiten in der zweiten Aufnahme einfügbaren Bestandteil einen ringförmige Wulst auf, der als Anschlag dient.

Der Hohlkörper weist überdies vorteilhafter Weise an seinem zweiten Ende Kerben auf, welche die Spreizung des zweiten Endes durch den Vorschub des Aktivierungselementes erlauben. Das Aktivierungselement ist vorteilhafter Weise durch einen ersten das erste Ende des Hohlkörpers aktivierenden Bereich und einen zweiten die Schultern aktivierenden Bereich mit größerer Breite als der erste Bereich ausgebildet, wobei die Schultern am Hohlkörper anwesend sind und vorteilhafter Weise Flügel aufweisen und in vorgerückter Stellung des Aktivierungselementes werden diese Schultern gespreizt und widersetzen sich dem Auszug aus der Aufnahme, in der die Verbindungsvorrichtung eingebracht wurde.

Das Aktivierungselement weist nun eine bevorzugter Weise durchgehende Öffnung in seinem Körper auf um das Verbindungselement einbringen zu können. Das Verbindungselement wird der Art eingebracht, dass eine drehbare Kupplung gebildet wird und auf diese Weise, wenn das Verbindungselement zum Beispiel mittels eines Schraubenzieher oder eines anderen Werkzeuges gedreht wird, wird das Aktivierungselement innerhalb des Hohlkörpers verschoben. Das Aktivierungselement weist überdies einen Endteil mit Erhebungen mit Doppelkreuz auf, die in Öffnungen, Spalten an seinem zweiten Ende eingebracht werden können. Diese Erhebungen üben sobald das Aktivierungselement mittels des Verbindungselements verschoben wird, einen Druck auf den Hohlkörper aus und spreizen diesen Letzteren. Durch die Spreizung wird der Hohlkörper besser in der zweiten Aufnahme des Bestandteils eingespannt. Bevorzugter Weise weist auch in diesem Bereich der Hohlkörper Flügel auf seiner Außenfläche auf. Diese Flügel sind der Art angeordnet, dass der Auszug aus der Aufnahme des Bestandteiles schwieriger gestaltet wird.

Mit der Verschiebung und daher dem Vorschub des Aktivierungselementes des Hohlkörpers schiebt das Ende des Aktivierungselementes das erste Ende des Hohlkörpers und spreizt diesen. Bevorzugter Weise werden die Schultern gespreizt und die geneigten Flächen liegen auf der Oberfläche der ersten Aufnahme des ersten Bestandteils auf. Dank der Neigung der Oberflächen erzeugt die Verbindungsvorrichtung eine Zugkraft zwischen den beiden Bestandteilen.

Um das Verbindungselement in der zweiten Aufnahme aktivieren zu können, muss eine seitliche Öffnung vorhanden sein, durch die der Benutzer das Verbindungselement dreht und daher das Aktivierungselement verschiebt.

Das zweite Ende des Hohlkörpers weist vorteilhafter Weise eine Form eines Doppelkreises auf. Auf diese Art ist es möglich, das zweite Ende des Hohlkörpers in die Aufnahme des zweiten Bestandteiles nur in zwei zueinander gespiegelten Stellen einzubringen. Da das Verbindungselement an beiden Seiten aktivierbar ist, kann auf diese Weise der Benutzer auch wenn nur eine Öffnung für den Zugang des Benutzers vorhanden ist, immer das Verbindungselement erreichen. Dies ist besonders vorteilhaft, da, wollte man an einem zweiten Zeitpunkt von neuem die Verbindung lösen, die Verbindungsvorrichtung während ihrer Lebensdauer nicht gedreht werden kann, da die Aufnahme im zweiten Bestandteil keine Drehung der Verbindungsvorrichtung erlaubt.

Weitere Merkmale und Einzelheiten gehen aus den Patentansprüchen und aus der folgenden Beschreibung von in der beiliegenden Zeichnung dargestellten Ausführungsformen hervor, in der zeigen,
- Figur 1: eine perspektivische Ansicht der erfindungsgemäßen Vorrichtung,
- Figur 2a,2b und c2: eine perspektivische Ansicht der einzelnen Teile der erfindungsgemäßen Vorrichtung,
- Figur 3a,3b,3c und 3d: eine perspektivische Stirnansicht, von oben, von unten und seitlich der erfindungsgemäßen Vorrichtung,
- Figur 4a,4b und 4c: eine stilisierte Ansicht von oben, von unten und seitlich der erfindungsgemäßen Vorrichtung,

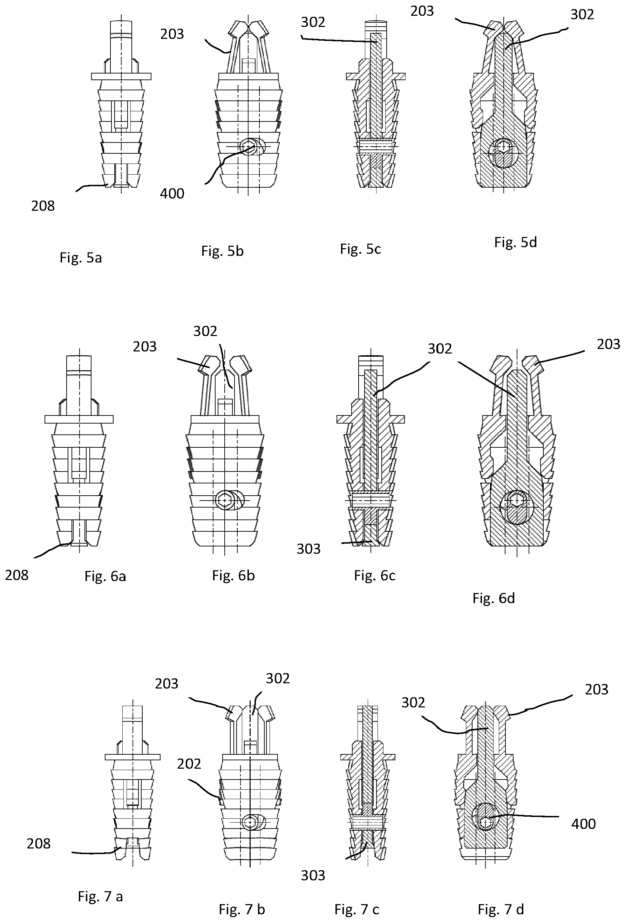

- Figur 5a,5b,5c und 5d: eine seitliche und stirnseitige Ansicht und einen seitlichen und stirnseitigen Querschnitt der erfindungsgemäßen Vorrichtung während der Schließung,
- Figur 6a,6b,6c und 6d: eine seitliche und stirnseitige Ansicht und einen seitlichen und stirnseitigen Querschnitt der erfindungsgemäßen Vorrichtung in der geöffneten Stellung,
- Figur 7a,7b,7c und 7d: eine seitliche und stirnseitige Ansicht und einen seitlichen und stirnseitigen Querschnitt der erfindungsgemäßen Vorrichtung in Arretierstellung,

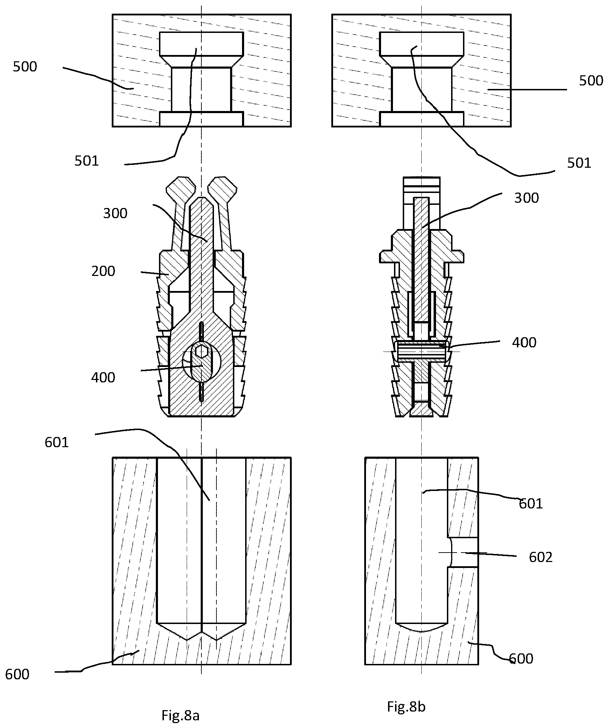

- Figur 8a und 8b: einen seitlichen und stirnseitigen Querschnitt mit Aufnahmen vor der Einführung,
- Figur 9a und 9b: einen seitlichen und stirnseitigen Querschnitt mit Aufnahmen während der Einführung,
- Figur 10a und 10b: einen seitlichen und stirnseitigen Querschnitt mit Aufnahmen in Arretierstellung,

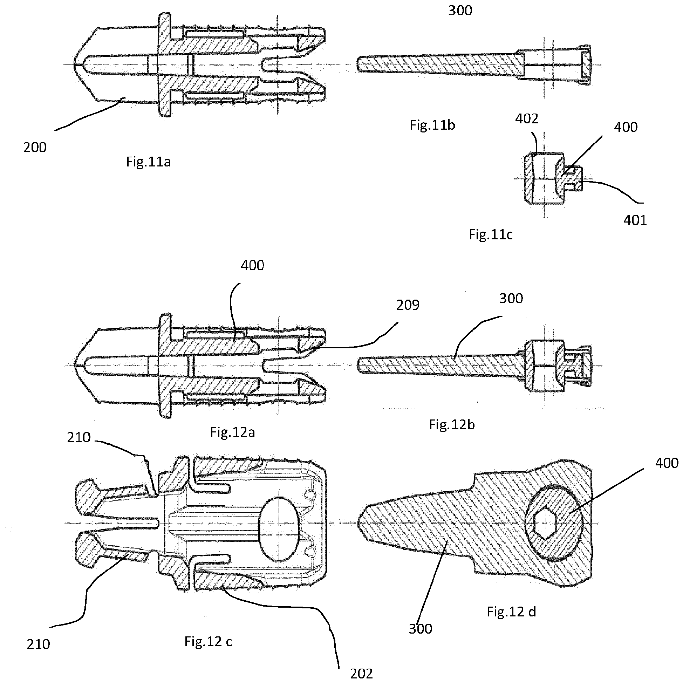

- Figur 11a, 11b, 11c, 12a, 12b, 12c e 12d: Querschnitte der einzelnen Teile und des Zusammenbaus einer erfindungsgemäßen Vorrichtung in einer weiteren Ausführungsform.

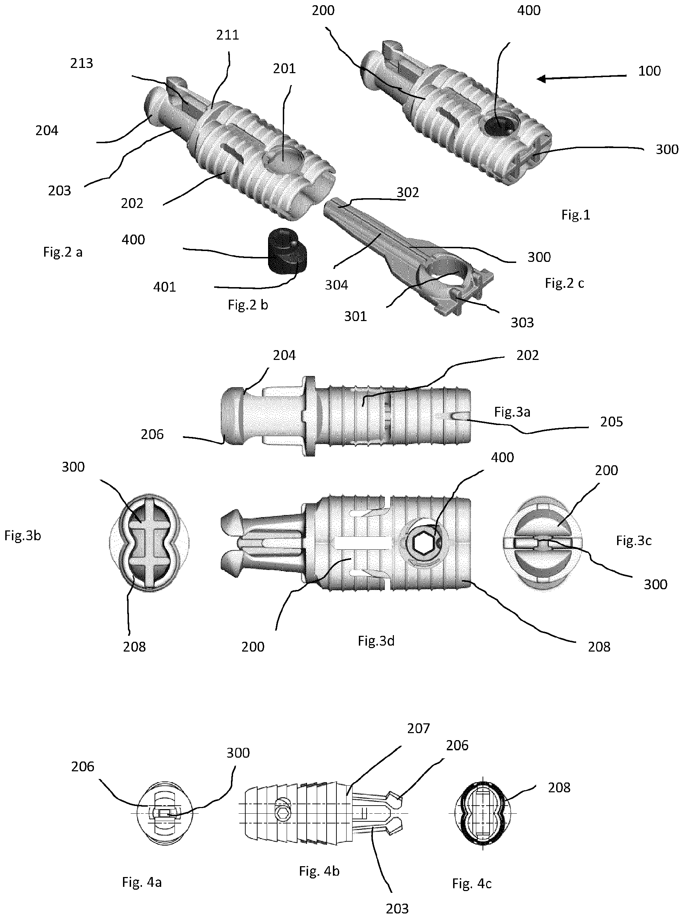

Figur 1 zeigt die Gesamtheit einer erfindungsgemäßen mit der Bezugsziffer 100 angegebenen Verbindungsvorrichtung. In Figur 2 ist eine explosionsartig die Verbindungsvorrichtung 100 in ihren Einzelteilen erläutert. Es ist anzumerken, dass die Vorrichtung nur aus drei zueinander leicht montierbaren Elementen besteht. Die erfindungsgemäße Vorrichtung besteht aus einem Hohlkörper 200, der die Schale der Vorrichtung bildet, in der ein Aktivierungselement 300 aufgenommen ist. Der Hohlkörper 200 weist mindestens eine Öffnung auf einer Seite 201 auf. Diese Elemente 200, 300 und 400 sind entworfen um über Druckguss aus Plastik hergestellt zu werden. Dies erlaubt eine wirtschaftliche und serienmäßige Herstellung. Da überdies die einzelnen Elemente serienmäßige Produkte sind, können sie leicht ausgetauscht werden. Sollte während der Verwendung ein einzelnes Teil brechen, so kann es ausgetauscht werden. Die erfindungsgemäße Verbindungsvorrichtung 100 ist derart ausgeführt, dass sie einfach manuell und/oder maschinell montiert werden kann.

Dieses Aktivierungselement 300 wird über eines der Enden des Hohlkörpers 200 eingeführt. Das Aktivierungselement 300 weist in seinem Inneren eine Öffnung 301 auf, in der das Verbindungselement 400 eingebracht und die im montierten Zustand mit der Öffnung des Hohlkörpers 201 ausgerichtet ist. Um das Verbindungselement im Hohlkörper 200 zu befestigen wird das Verbindungselement 400 eingeführt. Das Verbindungselement 400 weist bevorzugter Weise eine Erhebung 401 auf. Diese Erhebung wird drehbar mit dem Aktivierungselement 300 gekoppelt und falls das Verbindungselement 400 gedreht wird dieses in einer dem Ende des Hohlkörpers 200 abgewandten Längsrichtung verschoben, in welcher das Aktivierungselement 300 innerhalb des Hohlkörpers 200 eingeführt wurde.

In den Figuren von 5a bis 7d sind perspektivische Ansichten und Querschnitte einer erfindungsgemäßen Vorrichtung in den verschiedenen Gebrauchsschritten erläutert. Insbesondere ist zu bemerken, dass vorteilhafter Weise die seitliche Öffnung 201 des Hohlkörpers 200 in einer Ausführungsform eine elliptische Öffnung sein kann. Auf diese Weise ist es möglich, das Verbindungselement 400 mit seinem Vorsprung 401 über die seitliche Öffnung 201 einzuführen, indem das Aktivierungselement 300 mit dem Hohlkörper 200 verbunden wird.

In den Figuren von 8a bis 10b werden die verschiedenen Schritte während der Montage der Verbindungsvorrichtung in den beiden in den entsprechenden Bestandteilen gebildeten Aufnahmen erläutert. Vorteilhafter Weise sind die Bestandteile Teile von Holzmöbeln oder ähnlichem.

Im ersten Bestandteil 500 wird eine Aufnahme 501 ausgeführt, die eine Aussparung aufweist. Im zweiten Bestandteil 600 wird eine zweite Aufnahme 601 gebildet, die vorteilhafter Weise einen Querschnitt in der Form eines Doppelkreises aufweist. Überdies wird eine seitliche Öffnung 602 in der zweiten Aufnahme 601 derart ausgeführt, dass außerhalb der in der zweiten Aufnahme 601 eingeführten Verbindungsvorrichtung 100 Zugang gefunden wird.

Vorteilhafter Weise wird in der ersten Aufnahme 501 überdies eine Aussparung gebildet, um den ringförmigen Wulst 211 aufzunehmen, der außerhalb des Hohlkörpers 200 ausgebildet und ein Anschlag ist, um die Tiefe der Einführung der Verbindungsvorrichtung 100 in der ersten Aufnahme 501 und/oder in der zweiten Aufnahme 601 zu begrenzen.

Vorteilhafter Weise ist die Aussparung in der ersten Aufnahme 501 gegenüber dem Boden der Aussparung 501 geneigt ausgebildet.

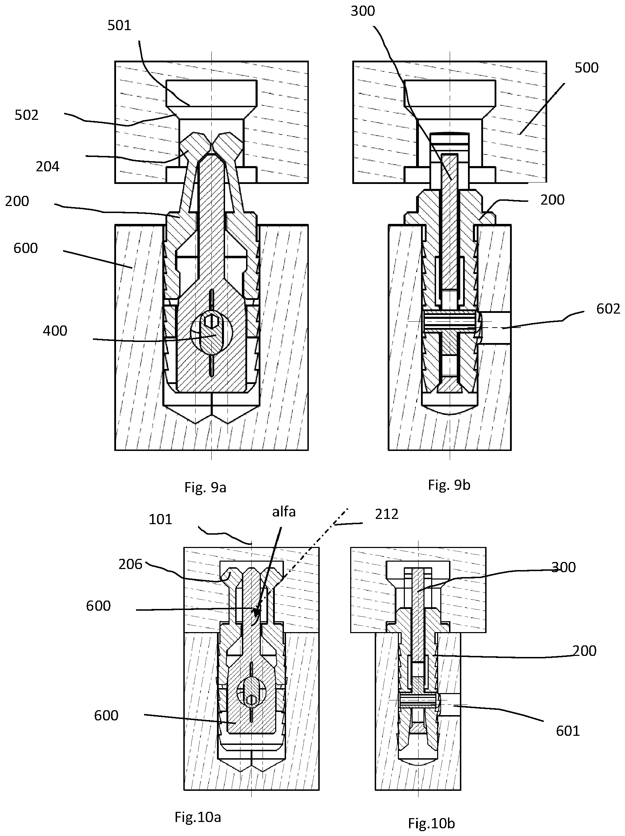

In einem ersten Schritt der Verbindungsvorrichtung 100 wird in der zweiten Aufnahme 601 das zweite Ende 208 der Verbindungsvorrichtung 100 eingeführt. Dank der Querschnittsform mit Doppelkreis wird die Verbindungvorrichtung selbsttätig auf die seitliche Öffnung 602 der zweiten Aufnahme 601 zentriert. In einem zweiten Schritt, wie in den Figuren 9a e 9b dargestellt, liegt der ringförmige Wulst auf die zweite Aufnahme 601 derart auf, dass die Einführungstiefe des zweiten Endes der Verbindungsvorrichtung 100 begrenzt wird. Das erste Ende 206 der Verbindungsvorrichtung 100 wird in die erste Aufnahme 501 eingebracht.

Am Ende der Einführung des ersten Endes 206 in der ersten, eine Aussparung bevorzugter Weise mit einer geneigten Fläche 502 aufweisenden Aufnahme 501 wird das Aktivierungselement 300 durch Drehung des Verbindungselementes 400 bewegt. Diese Aktivierung erfolgt über die seitliche Bohrung 602. Durch die Drehung des Verbindungselementes 400 und insbesondere über den Vorsprung 401 des Verbindungselementes 400 wird das Aktivierungselement 300 innerhalb des Hohlkörpers 200 in Längsrichtung bewegt. Durch seine Bewegung schiebt das Aktivierungselement die Schultern 203 nach außen, indem der Kopf des Endes 204 bewegt wird. Mit dem Vorschub des Aktivierungselementes 300 wird auch das zweite Ende 208 gespreizt. Diese Spreizbewegung wird durch die am Hohlkörper 200 vorgesehenen Öffnungen 205 erleichtert. Die kreuzförmige Endstruktur des Aktivierungselementes erlaubt den Hohlkörper 200 in allen Richtungen aufzuspreizen. Die auf der Außenfläche des Hohlkörpers 200 angeordneten Flügel erzeugen so eine größere Reibung mit der Oberfläche der Aufnahme 601 und vermeiden einen Auszug des zweiten Endes 208 des Hohlkörpers 200 aus der Aufnahme 601 des zweiten Bestandteils 600. Vorteilhafter Weise wird mit der Vorschubbewegung innerhalb des Hohlkörpers 200 das Aktivierungselement 300 auch die Flügel 202 spreizen, die auch sie einem Auszug des zweiten Endes aus der zweiten Aufnahme 601 entgegenwirken. Mit dem Vorschub des Aktivierungselementes 300 spreizt überdies die Spitze des Aktivierungselementes 300 das erste Ende 206. Die geneigte Fläche 204 der erfindungsgemäßen Verbindungsvorrichtung 100 liegt auf der, bevorzugter Weise, geneigten Fläche 502 der Aufnahme 501 auf. Mit dem Vorschub des Aktivierungselementes 300 und der Auflage der geneigten Fläche des Hohlkörpers 204 gegen die geneigte Fläche der Aufnahme 502 verkürzt die Verbindungsvorrichtung 100 den Abstand zwischen dem ersten Bestandteil und dem zweiten Bestandteil und stellt auf diese Weise eine Verbindung zwischen den beiden Bestandteilen mit einem Mindestspalt zwischen den Teilen her.

In einer bevorzugten Ausführungsform weist der Außenfläche des Hohlkörpers 200 Flügel 207 auf. Diese Flügel 207 erschweren einen ungewollten Auszug aus der zweiten Aufnahme 601 des zweiten Bestandteils.

Vorteilhafter Weise weist das erste Ende an der Basis der Schultern 203 eine Nut 210 auf, die eine leichtere Spreizung der Schultern 203 erlaubt.

Das erste Ende 206 weist überdies vorteilhafter Weise zwei oder drei Schultern 203 auf. Um die Einführung des ersten Endes 206 in der Aufnahme zu erleichtern, kann das erste Ende eine oder mehrere Seitenführungen 213 aufweisen. Diese oder diese Seitenführungen dienen dazu um das zweite enden innerhalb der ersten Aufnahme 501 zu zentrieren.

Vorteilhafter Weise weist das Verbindungselement 400 eine Öffnung 402 mit Wänden auf, die von außen nach innen zulaufen, indem die Abmessung der Öffnung in der Mitte des Verbindungselementes 400 reduziert wird. Auf diese Weise kann ein Werkzeug leichter Verwendung finden, da es in der Öffnung 402 zentriert wird. Vorteilhafter Weise wird das Verbindungselement 400 in einer Aufnahme am Anfang und am Ende des Laufes schnappartig arretiert um dem Benutzer einen Wink zu geben.

Die erfindungsgemäße Vorrichtung kann vollständig aufgrund ihrer Ausführung und Geometrie aus Kunststoff bestehen, der eine leichte und schnelle Montage und eine wirtschaftliche serienmäßige Produktion erlaubt.

Zahlreich sind die Möglichkeiten Varianten und Vorschläge vorzustellen, die am Schutzbereich des erfindungsgemäßen Gegenstandes vorgenommen werden können, der in der folgenden Patentansprüchen festgelegt ist.

### Aufstellung der Bezugsziffern

- 100: Verbindungsvorrichtung
- 101: Längsachse der Verbindungsvorrichtung
- 200: Hohlkörper
- 201: seitliche Öffnung
- 202: Flügel
- 203: Schultern
- 204: geneigte Fläche
- 205: Öffnungen
- 206: erstes Ende
- 207: Flügel
- 208: zweites Ende
- 210: Nut
- 211: ringförmiger Wulst
- 212: Projektion der geneigten Fläche
- 213: Seitenführung
- 300: Aktivierungselement
- 301: eine Öffnung
- 302: die Spitze des Aktivierungselementes
- 400: Verbindungselement
- 401: Vorsprung
- 402: Öffnung
- 500: erstes Bestandteil
- 501: erste Aufnahme des ersten Bestandteils
- 600: zweites Bestandteil
- 601: zweite Aufnahme des zweiten Bestandteils
- 602: seitliche Öffnung
- Alpha: Winkel zwischen der Längsachse der Verbindungsvorrichtung und der Projektion der geneigten Fläche

## Patentansprüche

1. Verbindungsvorrichtung zwischen zwei Bestandteilen (100), umfassend
- einen Hohlkörper (200), der sich längs einer Längsachse zwischen einem ersten, in einer ersten im ersten Bestandteil (500) ausgenommenen Aufnahme (501) aufgenommenen und einem zweiten in einer zweiten in einem zweiten Bestandteil (600) ausgenommenen Aufnahme (601) aufgenommenen Ende (206, 208) erstreckt, wobei die Verbindungsvorrichtung ein Aktivierungselement (300) umfasst, wobei der Hohlkörper (300) in einem seiner Enden (206, 208) eine Öffnung (400) für die Einbringung des Aktivierungselementes (300) aufweist, wobei das Aktivierungselement innerhalb des Hohlkörpers (200) verschiebbar ist, und wobei der Hohlkörper an einem Ende mindestens eine in Richtung des Endes mit einem Winkel (alpha) größer als 90° gegenüber der Längsachse des Hohlkörpers (100) geneigte Fläche aufweist und wobei das Aktivierungselement (300) eine im Wesentlichen mittig angeordnete Öffnung (301) aufweist, wobei der Hohlkörper mindestens eine Öffnung (201) auf der seitlichen Fläche aufweist und die Öffnung des Aktivierungselementes (301) und die Öffnung des Hohlkörpers (201) in montierter Stellung miteinander ausgerichtet sind und die Verbindungsvorrichtung (100) ein Verbindungselement (400) umfasst und wobei die Öffnung des Aktivierungselementes (301) das Verbindungselement (400) aufnimmt und das Verbindungselement (400) einen Vorsprung (401) aufweist, der drehbar mit dem Aktivierungselement (300) gekoppelt ist und unter Drehung des Verbindungselementes (400) das Aktivierungselement (300) von einer ersten Ruhestellung in eine zweite Arretierstellung bringt, in der das Ende, das eine in Richtung dieses Endes des Hohlkörpers mit einem Winkel größer als 90° geneigte Öffnung aufweist, in der die eine Aussparung aufweisende Aufnahme (501) eingebracht, aufgespreizt wird und wobei das zweite Ende (208) einen Querschnitt mit sich kreuzendem Doppelkreis aufweist, in dem die Schnittfläche eine Breite kleiner als der Radius eines der beiden Kreise aufweist.

2. Verbindungsvorrichtung zwischen zwei Bestandteilen (100) nach Anspruch 1, **dadurch gekennzeichnet, dass** auf der Außenfläche des Hohlkörpers (200) ein ringförmiger Wulst (211) vorhanden ist, der als Anschlag wirkt.

3. Verbindungsvorrichtung zwischen zwei Bestandteilen (100) nach einem der vorstehenden Ansprüche, **dadurch gekennzeichnet, dass** das erste Ende (206) an der Basis der Schultern (203) Nuten (210) aufweist.

4. Verbindungsvorrichtung zwischen zwei Bestandteilen (100) nach einem der vorstehenden Ansprüche, **dadurch gekennzeichnet, dass** das erste Ende zwei oder drei Schultern (203) aufweist.

5. Verbindungsvorrichtung zwischen zwei Bestandteilen (100) nach einem der vorstehenden Ansprüche, **dadurch gekennzeichnet, dass** das erste Ende äußere Führungen (213) aufweist.

6. Verbindungsvorrichtung zwischen zwei Bestandteilen (100) nach einem der vorstehenden Ansprüche, **dadurch gekennzeichnet, dass** das Aktivierungselement (300) an einem Ende einen Querschnitt mit Doppelkreuzform aufweist.

7. Verbindungsvorrichtung zwischen zwei Bestandteilen (100) nach einem der vorstehenden Ansprüche, **dadurch gekennzeichnet, dass** eine Öffnung (402) des Verbindungselementes (400) Wände aufweist, die in Richtung der Mitte des Verbindungselementes (400) zusammenlaufen.

## Claims

1. A junction device between two components (100), comprising
- a hollow body (200) which extends along a longitudinal axis between a first end (206) adapted to be received in a first seat (501) formed in a first component (500) and a second end (208) adapted to be received in a second seat (601) formed in a second component (600), the junction device comprising an activation element (300), the hollow body (200) having an opening in one of its ends (206, 208) for insertion of the activation element (300), the activation element being designed to slide inside the hollow body (200) and wherein the hollow body has, at one end, at least one surface inclined toward the end, at an angle (alpha) of more than 90° with respect to the longitudinal axis of the hollow body (201), the activation element (300) having an opening (301) arranged substantially at the center, the hollow body having at least one opening (201) on the lateral surfaces and the opening of the activation element (301) and the opening of the hollow body (201) being aligned in the assembled position, the junction device (100) comprising a connecting element (400) and wherein the opening of the activation element (301) accommodates the connecting element (400) and the connecting element (400) has a projection (401) that can be rotatably coupled to the activation element (300) and upon rotation of the connecting element (400), brings the activation element (300) from a first rest position to a second locked position, in which the end having a surface inclined toward the end of the hollow body at an angle of more than 90° inserted in the seat (501) with a recess is spread apart, and wherein the second end (208) has a cross section defined by two intersecting circles, in which the intersecting surface has a width less than the radius of one of the circles.

2. A junction device between two components (100) as claimed in claim 1, **characterized in that** an annular bulge (211) acting as an abutment is provided on the outer surface of the hollow body (200).

3. A junction device between two components (100) as claimed in any of the preceding claims, **characterized in that** the first end (206) has grooves (210) at the base of the shoulders (203).

4. A junction device between two components (100) as claimed in any of the preceding claims, **characterized in that** the first end has two or three shoulders (203).

5. A junction device between two components (100) as claimed in any of the preceding claims, **characterized in that** the first end has outer guides (213).

6. A junction device between two components (100) as claimed in any of the preceding claims, **characterized in that** the activation element (300) has a section defining a double cross at one end.

7. A junction device between two components (100) as claimed in any of the preceding claims, **characterized in that** an opening (402) of the connecting element (400) has walls converging toward the center of the connecting element (400).

## Revendications

1. Dispositif de jonction entre deux composants (100), comprenant
- un corps creux (200) qui s'étend le long d'un axe longitudinal entre une première extrémité (206) apte à être reçue dans un premier logement (501) formé dans un premier composant (500) et une seconde extrémité (208) apte à être reçue dans un second logement (601) formé dans un second composant (600), le dispositif de jonction comprenant un élément d'activation (300), le corps creux (200) possédant une ouverture dans l'une de ses extrémités (206, 208) pour l'insertion de l'élément d'activation (300), l'élément d'activation étant conçu pour glisser à l'intérieur du corps creux (200) et dans lequel le corps creux possède, à une extrémité, au moins une surface inclinée vers l'extrémité, formant un angle (alpha) de plus de 90° par rapport à l'axe longitudinal du corps creux (201), l'élément d'activation (300) possédant une ouverture (301) située sensiblement au centre, le corps creux possédant au moins une ouverture (201) sur les surfaces latérales et l'ouverture de l'élément d'activation (301) et l'ouverture du corps creux (201) étant alignés dans la position assemblée, le dispositif de jonction (100) comprenant un élément de liaison (400) et dans lequel l'ouverture de l'élément d'activation (301) accueille l'élément de liaison (400) et l'élément de liaison (400) possède une projection (401) qui peut être reliée de manière rotative à l'élément d'activation (300) et lors de la rotation de l'élément de liaison (400), amène l'élément d'activation (300) d'une première position de repos à une deuxième position verrouillée, dans laquelle l'extrémité ayant une surface inclinée vers l'extrémité du corps creux formant un angle de plus de 90° insérée dans le siège (501) comportant une évidement est écartée, et dans lequel la seconde extrémité (208) présente une section transversale en forme de deux cercles intersectés, dans lesquels la surface d'intersection a une largeur inférieure au rayon de l'un des cercles.

2. Dispositif de jonction entre deux composants (100) selon la revendication 1, **caractérisé en ce qu'**une protubérance annulaire (211) faisant fonction de butée est située sur la surface extérieure du corps creux (200).

3. Dispositif de jonction entre deux composants (100) selon l'une des revendications précédentes, **caractérisé en ce que** la première extrémité (206) comporte des rainures (210) à la base des épaulements (203).

4. Dispositif de jonction entre deux composants (100) selon l'une des revendications précédentes, **caractérisé en ce que** la première extrémité comporte deux ou trois épaulements (203).

5. Dispositif de jonction entre deux composants (100) selon l'une des revendications précédentes, **caractérisé en ce que** la première extrémité comporte des guides extérieurs (213).

6. Dispositif de jonction entre deux composants (100) selon l'une des revendications précédentes, **caractérisé en ce que** l'élément d'activation (300) présente une section définissant une double croix.

7. Dispositif de jonction entre deux composants (100) selon l'une des revendications précédentes, **caractérisé en ce qu'**une ouverture (402) de l'élément de liaison (400) possède des parois convergeant vers le centre de l'élément de liaison (400).
